# EUROPEAN PATENT APPLICATION

(11) **EP 0 556 958 A1**
(43) Date of publication of application: **25.08.1993**
(21) Application number: 93300483.0
(22) Date of filing: 22.01.1993
(51) Int. Cl.: F01L 25/06, F04B 9/10, F16K 31/08

(54) **Air compressor arrangements**

(30) Priority: 31.01.1992 GB 9202103
(71) Applicant: GEC-MARCONI AEROSPACE LTD., Titchfield, Hampshire PO14 4QA (GB)
(72) Inventor: Cook, Ronald George Thomas, Fareham, Hampshire PO15 6AR (GB); Bone, Geoffrey Edward, Crowthorne, Berkshire RG11 6PE (GB); Massey, Alan Ernest, Southampton, Hampshire SO3 6NN (GB); Davies, Guy Edward, Fareham, Hampshire PO14 1SY (GB); Kingham, Michael Alec, Southampton, Hampshire SO3 6XE (GB)
(74) Representative: Lawrence, Brian Richard

(57) **Abstract**

An air compressor arrangement especially suitable for boosting hydraulic tank pressure on an aircraft comprises a housing 1, 2, two independently acting piston units 12, 17 reciprocatively mounted in the housing 1, 2, a spool valve arrangement 29, 31, 32 for controlling successive compression and return strokes of the piston units 12, 17, the spool valve arrangement 29, 31, 32 being effective for applying pressurised hydraulic fluid to the piston units 12, 17 for effecting the compression strokes and for controlling the application of hydraulic fluid or air to the piston units 12, 17 for effecting the return strokes, and a hydraulic AND gate arrangement 45, 48, 64 and 46, 49, 63 for controlling the spool valve arrangement 29, 31, 32 whereby air input to the arrangement is compressed by the piston units 12, 17 and is output to a compressed air outlet 70 thereof.

## Description

This invention relates to air compressor arrangements and is especially applicable to such arrangements for use in aircraft systems, for example, for maintaining the hydraulic boost pressure in the hydraulic tank. It should be appreciated, however, that the invention may have much wider application.

The current situation that exists on some aircraft hydraulic systems is that the tank pressurisation is achieved by tapping off the low pressure stages of the engine compressor. At flight cruise condition at all altitudes, this pressure is adequate to maintain tank pressurisation at the desired level. This pressure level is determined by the main hydraulic pumps inlet requirement, which is that pressure required to prevent cavitation at the inlet. If this boost pressure is not maintained, then damage and a reduction in pump performance will occur. Reduction in boost pressure can occur due to low engine pressures when the aircraft is in descent mode with the engine at flight idle setting. This is particularly applicable at higher altitudes.

It is an object of the present invention to provide an air compressor arrangement which operates on low pressure air, for example from the engine compressor or from the cabin, for generating full boost pressure for the hydraulic tank thus ensuring full pump performance over the full flight envelope and obviating damage which may otherwise be caused due to cavitation.

Whilst ideally suited to such an application it should be appreciated that a similar arrangement may be used in ground applications where similar conditions exist.

According to the present invention there is provided an air compressor arrangement comprising a housing, two independently acting piston units each reciprocatively mounted in said housing, valve means for controlling successive compression and return strokes of said piston units, said valve means being effective for applying pressurised hydraulic fluid to said piston units for effecting the compression strokes thereof, means operable under the control of said valve means for causing said piston units to effect said return strokes, and hydraulic AND gate means associated with each of said piston units for controlling said valve means whereby air input to said arrangement is compressed by said piston units and is output to a compressed air outlet thereof.

In one preferred arrangement according to the invention it will be arranged that said valve means is effective for applying pressurised hydraulic fluid to said piston units for effecting the return strokes thereof.

In carrying out the said one preferred arrangement it may be arranged that each of said piston units comprises a main piston reciprocatively mounted in a respective cylinder chamber of said housing, each of said main pistons having a respective piston shaft, said piston shafts extending towards each other and each having an end face, which end faces are disposed adjacent one another, said valve means being effective for applying pressurised hydraulic fluid between said end faces for causing said piston units to effect said compression strokes.

Advantageously each of said piston shafts has a hollow interior, respective, return stroke pistons being provided which extend into said hollow interiors, said valve means being effective for applying pressurised hydraulic fluid to said return stroke pistons and into said hollow interiors, for effecting said return strokes of said piston units.

It may be arranged that said hydraulic AND gate means comprises first and second hydraulic ports associated with each of said piston shafts, said first ports being interconnected and connected to said control valve and said second ports being interconnected and connected to said control valve, each of said piston shafts having means operable in one end position of said piston units for opening said first ports and closing said second ports for setting said valve means in one of two operating positions thereof, and having means operable in the other end position of said piston units for opening said second ports and closing said first ports for setting said valve means in the other of said two operating positions thereof.

Said valve means may take the form of a spool valve arrangement comprising a spool valve which is moveable between two end positions under the control of said hydraulic AND gate means, and which is effective for controlling the application of pressurised hydraulic fluid to said piston units for effecting the compression and return strokes thereof.

Advantageously, the spool valve arrangement comprises magnetic end stop means for maintaining said spool valve in each of its end positions.

It may be arranged that an air compressor arrangement in accordance with said one preferred arrangement comprises an air inlet individually associated with each of said cylinder chambers, non-return valve means associated with each of said air inlets for allowing air flow to said chambers, a common compressed air outlet associated with said cylinder chambers, and non-return valve means associated with said common air outlet for allowing compressed air flow from said chambers.

In a second preferred arrangement according to the invention it will be arranged that each of said piston units comprises a main piston, each of said main pistons being reciprocatively mounted in a common cylinder chamber of said housing, each of said main pistons having a respective piston shaft, said piston shafts extending away from each other, said valve means being effective for applying pressurised hydraulic fluid to each of said piston shafts for effecting the compression strokes of said main pistons, means being provided for applying a pressurised air supply to said common cylinder chamber and between said main pistons for effecting the return strokes of said main pistons.

In carrying out the said second preferred arrangement it may be arranged that each of piston shafts has a hollow interior, said valve means being effective for supplying pressurised hydraulic fluid to said hollow interiors for effecting said compression strokes of said main pistons.

Advantageously, the arrangement comprises a flow restricting damper respectively associated with each of said hollow interiors for controlling the flow of pressurised hydraulic fluid thereto.

In accordance with said second preferred arrangement it may be arranged that said hydraulic AND gate means comprises first and second hydraulic ports associated with each of said piston shafts, said first ports being interconnected and connected to said control valve and said second ports being interconnected and connected to said control valve, each of said piston shafts having means operable in one end position of said piston units for opening said first ports and closing said second ports for setting said valve means in one of two operating positions thereof, and having means operable in the other end position of said piston units for opening said second ports and closing said first ports for setting said valve means in the other of said two operating positions thereof.

Said valve means may take the form of a spool valve arrangement comprising a spool valve which is moveable between two end positions under the control of said hydraulic AND gate means, and which is effective for controlling the application of pressurised hydraulic fluid to said piston units for effecting the compression strokes thereof.

Advantageously, the spool valve arrangement comprises magnetic end stop means for maintaining said spool valve in each of its end positions.

It may be arranged that an air compressor arrangement in accordance with said second preferred arrangement comprises a pressurised air inlet associated with said common cylinder chamber, non-return valve means associated with said pressurised air inlet for allowing pressurised air flow to said chamber and between said pistons, a compressed air outlet associated with common cylinder chamber, and non-return valve means associated with said compressed air outlet for allowing compressed air flow from said common cylinder chamber.

An especially envisaged air compressor arrangement in accordance with the present invention will be adapted for boosting the pressure of an aircrafts hydraulic tank.

Some exemplary embodiments of the invention will now be described reference being made to the accompanying drawings, in which:-
Figure 1, depicts an air compressor arrangement in accordance with one aspect of the present invention;
Figures 2 and 3, depict the spool valve assembly of Figure 1 in greater detail, in each of its respective operating conditions;
Figure 4, depicts an alternative air compressor arrangement in accordance with another aspect of the present invention;
Figure 5, depicts the air inlet non-return valve of Figure 4 in greater detail; and
Figure 6, depicts the air outlet non-return valve of Figure 4 in greater detail.

The air compressor arrangements to be described are powered by a limited bleed from the aircrafts hydraulic system, and consist essentially of two opposed reciprocating piston units synchronised using mechanical "AND" gates. Each piston unit comprises a large and a small piston. The large piston compresses the air using hydraulic pressure acting on the small piston and hydraulic pressure or pneumatic pressure is used for powering the return stroke of the large piston. The non-working side of the large piston is connected to local ambient. In situations where engine compressor air is used to supply the working side, the piston return stroke may be powered by the compressor air since it is always above the ambient air pressure. When cabin air is used, then at low altitude there is insufficient pressure difference available to power the return stroke.

In this instance it is therefore necessary to use hydraulic power for this purpose. In some applications it may be possible to use a return spring.

As a result of these differing requirements for return stroke power, it has been necessary to design two devices which will now be described.

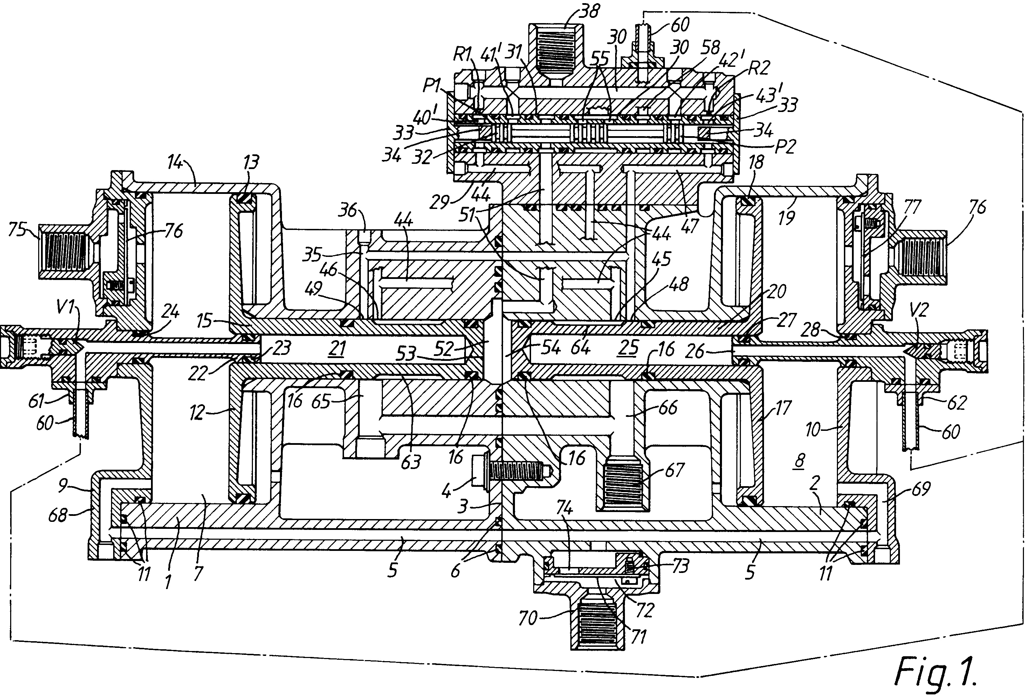

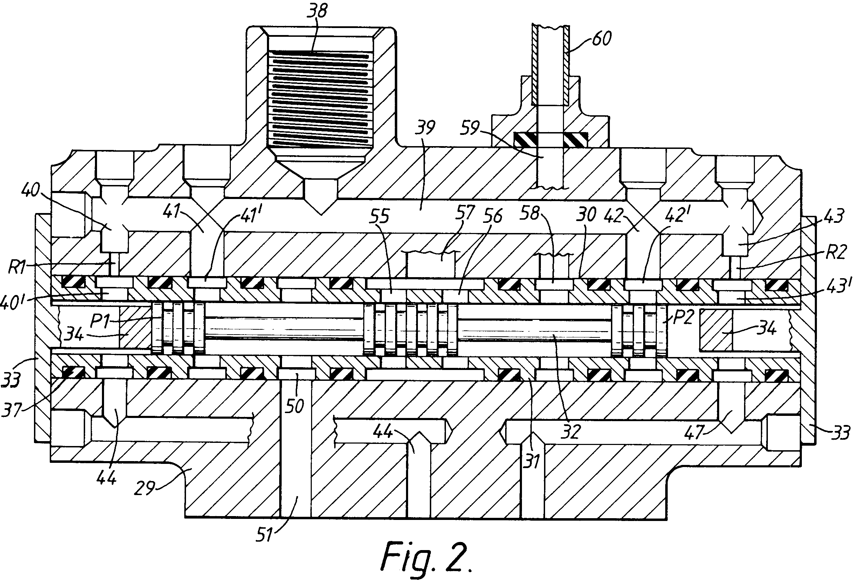

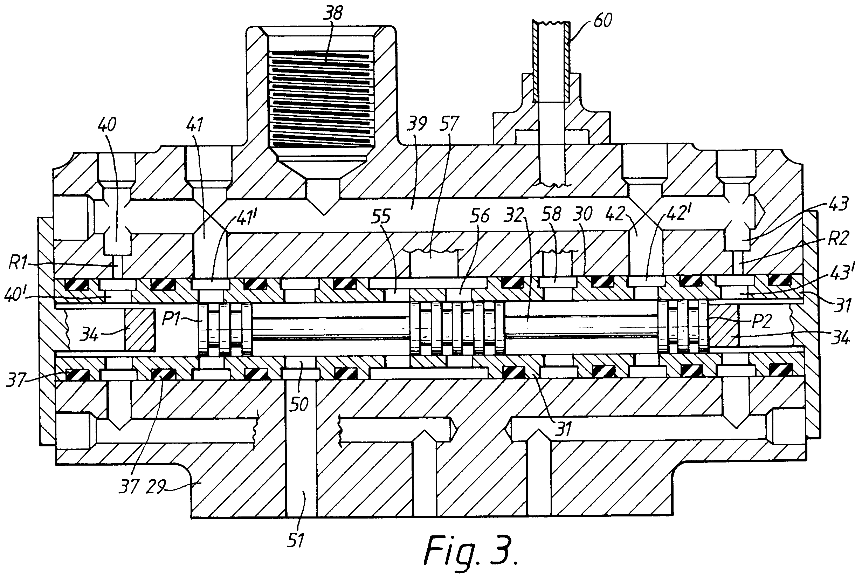

The air compressor shown in Fig. 1 and the associated Figs. 2 and 3, makes use of hydraulic pressure for powering both the compression stroke and return stroke of the large pistons.

The air compressor shown in Fig. 1 of the drawings comprises a left hand side (LHS) cylinder housing 1 and a right hand side (RHS) cylinder housing 2 which are bolted together at an interface 3 by means of threaded bolts, one of which is shown at 4. The LHS cylinder housing 1 and the RHS cylinder housing 2 are provided with various interconnecting passages e.g. 5, the interface of each of which is provided with an annular static seal e.g. 6 which prevents seepage from the respective passage e.g. 5. The LHS cylinder housing 1 and RHS cylinder housing 2 are each provided with a cylinder chamber 7 and 8 respectively, each of which is closed by a respective cylinder end cover 9, 10 which is secured to the respective cylinder housing 1, 2. Again, various static seals 11 are provided between each of the cylinder housings 1, 2 and their respective end covers 9, 10.

Within the cylinder chamber 7 of the LHS cylinder housing 1 is disposed a (large) piston 12 provided around its periphery with a pneumatic seal 13 which is in sliding contact with the wall 14 of the chamber 7, the piston 12 being mounted on a piston shaft 15 which is reciprocatively mounted in the LHS cylinder housing 1 with suitable hydraulic seals 16 therebetween.

Similarly, within the cylinder chamber 8 of the RHS cylinder housing 2 is disposed a (large) piston 17 provided around its periphery with a pneumatic seal 18 which is in sliding contact with the wall 19 of the chamber 8, the piston 17 being mounted on a piston shaft 20 which is reciprocatively mounted in the RHS cylinder housing 2 with suitable hydraulic seals 16 therebetween.

The piston shaft 15 of the piston 12 is provided with a hollow interior 21 into which extends a return stroke piston 22, having a peripheral seal 23, which is fixedly supported in the cylinder end cover 9 with a seal 24 therebetween.

Similarly the piston shaft 20 is provided with a hollow interior 25 into which extends a return stroke piston 26, having a peripheral seal 27, which is fixedly supported in the cylinder end cover 10 with a seal 28 therebetween.

To the top, as viewed in Fig. 1, of the RHS cylinder housing 2 is mounted a spool valve housing 29 shown in greater detail in Figs. 2 and 3. The spool valve housing 29 is provided with a cylindrical through bore 30 in which is disposed a fixed spool valve sleeve 31 and within which is slidably mounted a cylindrical spool valve 32. The spool valve 32 is retained within the sleeve 31 by means of two end caps 33 which extend into respective each ends of the sleeve 31, and each of which is provided with magnetic end stops 34 the purpose of which will be explained hereinafter.

The LHS and RHS cylinder housings 1 and 2 respectively, the cylinder end covers 9 and 10, and the spool valve housing 29 are each provided with plurality of passages, such as the passage 35 in the LHS cylinder housing 1, which are conveniently formed by drilling from an external surface of the respective housing, the surface opening to the passages being closed by a plug, such as the plug 36, where such closure is required. Also, at the interfaces between the various housings 1, 2 and 29, the cylinder end covers 9 and 10, and between the spool valve sleeve 31 and the spool valve housing 29, various static seals are provided, such as the seals 6, 11 and 37, to prevent seepage from the various passages.

As shown more clearly in Figs. 2 and 3, the spool valve housing 29 is provided with a high pressure hydraulic supply inlet 38 which connects, via a coupling passage 39, with four valve inlet passages 40, 41, 42 and 43 which themselves connect with corresponding ports 40', 41', 42' and 43' in the spool valve sleeve 31. The inlet passages 40 and 43 are each provided with restrictors R1 and R2 respectively.

The port 40' of the spool valve sleeve 31 connects with a further passage 44 which extends into the RHS cylinder housing 2 and terminates in a port 45 adjacent the piston shaft 20 of piston 17, and which also extends from the RHS cylinder housing 2 into the LHS cylinder housing 1 and terminates in a port 46 adjacent the piston shaft 15 of piston 12.

Similarly, port 43' of the spool valve sleeve 31 connects with a further passage 47 which extends into the RHS cylinder housing 2 and terminates in a further port 48 adjacent the piston shaft 20 of piston 17, and spaced from the port 45 therein, and which also extends from the RHS cylinder housing 2 into the LHS cylinder housing 1 and terminates in a port 49 adjacent the piston shaft 15 of piston 12, and spaced from the port 46 therein.

The spool valve sleeve 31 is provided with a further port 50 which connects with a passage 51 in the spool valve housing 29 and which extends into the RHS cylinder housing 2 and then into the LHS cylinder housing 1 to connect with a chamber 52 disposed between the end faces 53 and 54 respectively of the piston shafts 15 and 20.

The spool valve sleeve 31 is also provided with further ports 55 and 56 both of which connect with a passage 57 in the spool valve housing 29, which extends to a hydraulic return outlet, to be described hereinafter.

The spool valve sleeve 31 is also provided with a further port 58 which connects with a passage 59 in the spool valve housing 29 and which is coupled by means of an external connecting pipe 60, shown in dashed lines in Fig. 1, to respective connectors 61 and 62 to the return stroke pistons 22 and 26 as will hereinafter be explained.

The piston shaft 15 of piston 12 is provided along its length with a reduced diameter portion 63 which, in one end position of the piston 12, as shown in Fig. 1, connects with the port 46 in the LHS cylinder housing 1, with the port 49 therein being effectively closed by the shaft 15, and which in the other end piston of the piston 12 (not shown), connects with the port 49 in LHS cylinder housing 1, with the port 46 therein being effectively closed by the shaft 15.

Similarly, the piston shaft 20 of piston 17 is provided along its length with a reduced diameter portion 64 which, in one end position of the piston 17, as shown in Fig. 1, connects with the port 45 in the RHS cylinder housing 2, with the port 48 therein being effectively blocked by the shaft 20, and which in the other end piston (not shown) of the piston 17 connects with the port 48 in the RHS cylinder housing 2, with the port 45 therein being sealed by the shaft 20.

The reduced diameter portion 63 of the piston shaft 15, connects with a passage 65 in the LHS cylinder housing 1 which extends to a passage 66 in the RHS cylinder housing 2 which connects to the reduced diameter portion 64 of the piston shaft 20 and also connects to an outlet 67 for connection to a hydraulic return pipe (not shown) which returns hydraulic fluid to a fluid supply reservoir (not shown).

The cylinder chamber 7 in the LHS cylinder housing 1 is provided with an air outlet passage 68 in the cylinder end cover 9, which connects with the outlet passage 5 in the LHS cylinder housing 1. Similarly, the cylinder chamber 8 in the RHS cylinder housing 2 is provided with an air outlet passage 69 in the cylinder end cover 10, which connects with the outlet passage 5 in the RHS cylinder housing 2. The outlet passages 5 in the LHS and RHS cylinder housings 1 and 2 are interconnected and are connected to an air compressor outlet 70 via a non-return valve 71. The non-return valve 71 comprises a flexible plate 72 which is fixed at one end by means of a screw 73, and the other end of which, in its normal quiescent condition closes an air outlet aperture 74 of the non-return valve 71. In this way air pressure in the outlet passages 5 acts on the flexible plate 72 through the aperture 74 and causes the plate to flex away from its normal position to allow air flow from the outlet passages 5 to the air compressor outlet 70. Conversely, air pressure in the air compressor outlet 70 acts on the flexible plate 72 causing it to close the aperture 74, thereby preventing air flow from the air compressor outlet 70 to either of the cylinder chambers 7 and 8.

The cylinder chamber 7 in the LHS cylinder housing 1 is also provided with an air inlet 75 disposed in the cylinder end cover 9 and with a non-return valve 76 for permitting air flow from the air inlet 75 to the cylinder chamber 7 but for preventing air flow from the cylinder chamber 7 to the air inlet 75. Similarly, the cylinder chamber 8 in the RHS cylinder housing 2 is provided with an air inlet 76 disposed in the cylinder end cover 10 and with a non-return valve 77 for permitting air flow from the air inlet 76 to the cylinder chamber 8 but for preventing air flow from the cylinder chamber 8 to the air inlet 76.

The air compressor described with reference to Figs. 1 to 3 operates as follows:

Hydraulic fluid at high pressure (normally 3000 psig nominal) is applied to the hydraulic supply inlet 38 of the spool valve housing 29 and is applied via the coupling passage 39 and the four valve inlet passages 40, 41, 42 and 43 to the corresponding ports 40', 41', 42' and 43' of the spool valve sleeve 31. The parts 40' and 43' connect the hydraulic supply to the ends P1 and P2 respectively of the spool valve 32. The ends P1 and P2 of the spool valve 32 also connect, via the passages 44 and 47 respectively, to the ports 45, 46 and ports 48, 49 respectively adjacent the piston shafts 15 and 20. With the pistons 12 and 17 in the position shown in Fig. 1 of the drawings, the ports 45 and 46 connect with the reduced diameter portions 64 and 63 respectively of the piston shafts 20 and 15 respectively and thereby connect with the hydraulic return outlet 67 via the passage 66 and the passage 65, 66 respectively. Thus there is no pressure build-up at the end P1 of the spool valve 32. However, the ports 48 and 49 are closed by the respective piston shafts 20 and 15, thereby causing the pressure at end P2 of the spool valve 32 to increase to cause the spool valve 32 to be biased towards the left as viewed in Figs. 1 and 2. The spool valve 32 is maintained in this piston by means of the magnetic end stop 34 acting on the end P1 of the spool valve 32.

With the spool valve 32 in the position shown in Figs. 1 and 2, the port 42' is closed by the spool valve 32 but the port 41' is open and allows the high pressure hydraulic fluid applied to the hydraulic supply inlet 38 to be applied to the chamber 52 disposed between the end faces 53 and 54 of the piston shafts 15 and 20 respectively.

The hydraulic pressure in chamber 52 causes the piston shafts 15 and 20 to be forced apart and causes the pistons 12 and 17 to be moved in opposite directions in the respective cylinder chambers 7 and 8 to cause the air therein to be compressed. The compressed air is fed via the passages 68 and 69 and the outlet passages 5 to the air compressor outlet 70 via the common outlet non-return valve 71. The common interconnection between the cylinder chambers 7 and 8 unifies the air pressure to afford a common force acting on both of the pistons 12 and 17.

As the piston shafts 15 and 20 are forced apart, hydraulic fluid in the hollow interiors 21 and 25 thereof is forced through the central bores in the return stroke pistons 22 and 26 respectively, through the respective connectors 61 and 62 to the connecting pipes 60 which connect to the port 58 in the spool valve housing 29, which port is coupled by means of the spool valve 32 to the port 56 and thence to the passage 57 (Figs. 2 and 3) which connects (by means not shown) to the hydraulic return outlet 67. In this way hydraulic pressure build-up in the hollow interiors 21 and 25 of the piston shafts 15 and 20 is prevented.

During the time the pistons 12 and 17 are effecting their compression strokes, the ports 45 and 48 associated with piston shaft 20 couple with the reduced diameter portion 64 thereof and are coupled via the passage 66 to the hydraulic return outlet 67. Similarly, the ports 46 and 49 associated with piston shaft 15 couple with the reduced diameter portions 63 thereof and are also coupled, via the passages 65 and 66 to the hydraulic return outlet 67. As already mentioned, the spool valve 32 is maintained in its position by the magnetic end stop 34 contact end P1 of the spool valve 32. When the pistons 12 and 17 are in their mid-positions with the ports 45, 46, 48 and 49 open there is a flow of hydraulic fluid from the hydraulic supply 38 to the hydraulic return 67 which causes the passages surrounding the reduced diameter portions 63 and 64 of the piston shafts 15 and 20 respectively to be continuously flushed.

As the pistons 12 and 17 move outwards relative to one another in response to the hydraulic pressure in chamber 52, a point is reached where either the port 45 associated with piston shaft 20 or port 46 associated with piston shaft 15 is closed by the respective shaft. However, pressure build-up in this port is prevented due to the other port with which it is interconnected, still being connected, effectively to the hydraulic return outlet 67. When the other of the two ports 45 and 46 is closed by the respective piston shaft 20 or 15, hydraulic pressure builds up in passages 44 and cause pressure build-up at end P1 of the spool valve 32. This pressure build-up reaches a point where it overcomes the magnetic force between the magnetic end stop 34 and the end P1 of the spool valve 32, and causes the spool valve 32 to be forced to the right as viewed in Figs. 1 and 2, as is shown in Fig. 3. The spool valve is maintained in this position by the magnetic end stop 34 acting on the end P2 of the spool valve 32. The fact that both of the ports 45 and 46 need to be closed before pressure build-up occurs, ensures that both of the pistons 12 and 17 have completed their compression strokes, before a "return" stroke is activated, thereby effecting a mechanical (hydraulic) "and" gate function.

In the position of the spool valve 32 shown in Fig. 3, port 41' is closed thereby disconnecting the hydraulic supply feed to the chamber 52, and port 55 is opened, thereby effectively connecting the chamber 52, via the passage 51, to the passage 57 which connects to the hydraulic return outlet 67 (Fig. 1). The port 56 is also closed, and port 42' is opened whereby the hydraulic pressure applied to the hydraulic inlet 38 is applied, via port 58, connecting pipes 60, respective connectors 61 and 62, respective restrictor valves V1 and V2, through the central bores in the return stroke pistons 22 and 26 to the hollow interiors 21 and 25 of the piston shafts 15 and 20 respectively.

The hydraulic pressure applied to the interiors 21 and 25 of the respective piston shafts 15 and 20, causes the piston shafts 15 and 20 to be moved towards each other, so that hydraulic fluid in chamber 52 between them is evacuated via the passage 51, port 50, port 55 and passage 57 to the hydraulic return outlet 67. As the piston shafts 15 and 20 are moved, the respective pistons 12 and 17 are caused to move in their respective chambers 7 and 8, causing air to be drawn into the chambers 7 and 8 via the respective non-return valves 76 and 77 and causing the outlet non-return valve 71 to be closed.

As the piston shafts 15 and 17 are moved, both of the ports 46 and 49 are opened due to the reduced diameter portion 63 on the piston shaft 15, and both of the ports 45 and 48 are opened due to the reduced diameter portion 64 on the piston shaft 20. The ports 45, 48, 46 and 49 are thereby connected, via the passages 65 and 66 to the hydraulic return outlet 67, thereby removing the hydraulic pressure applied to end P1 of the spool valve 32. The spool valve 32 is, however, maintained in the position shown in Fig. 3 by the action of the magnetic end stop 34 acting on the end P2 of the spool valve 32.

As the piston shafts 15 and 17 move towards each other, a point is reached where the reduced diameter portion 63 of piston shaft 15 extends past port 49 causing it to be closed, and similarly the reduced diameter portion 64 of the piston shaft 20 extends past port 48 causing it to be closed. When both of the ports 48 and 49 are closed pressure builds up in passages 47 and 35 and at end P2 of the spool valve 32. This pressure build-up reaches a point where it overcomes the magnetic force between the magnetic end stop 34 and the end P2 of the spool valve 32 and causes the spool valve 32 to be forced to the left as viewed in Figs. 1 to 3, and as is shown in Figs. 1 and 2, which corresponds to the start of the compression stroke as has already been described.

In this way, the pistons 12 and 17 under the control of the spool valve 32, are each caused to effect successive compression strokes and return strokes, for causing air input to the chambers 7 and 8 via the air inlets 75 and 76 respectively, to be compressed and output via the air compressor outlet 70.

From the foregoing it can be seen that the pistons 12 and 17 must be totally in phase before either the compression strokes or the return strokes can be commenced. The system is therefore phased by the "AND" gate function afforded by the ports 45, 48 and 46, 49 in association with the reduced diameter portions 64 and 63 respectively of the piston shafts 20 and 15. Any speed mis-match during stroking can be trimmed out by setting the restrictor valves V1 and V2 on test.

Fluid damping is inherent in the system and prevents mechanical contact between the pistons and housings. Additional damping can be incorporated by restricting fluid flow as a function of piston stroke, as will be described in the following embodiment.

One important feature of the system is that the ratio between the actuator piston area and the working piston area, is chosen so that the system stalls when the maximum required system air pressure is achieved. This is an important safety feature of the system.

In the air compressor described with reference to Figs. 1 to 3, the compression and return strokes of the pistons 12 and 17 are typically powered by a limited bleed from the aircrafts hydraulic system and relies on ambient air, for example cabin air, being supplied to the chambers 7 and 8 of the pistons 12 and 17 respectively.

In the situation where engine compressor air is available to supply the working side of the pistons 12 and 17, this may also be used to power the return strokes since it is always above the ambient air pressure. By so doing the air compressor may be greatly simplified.

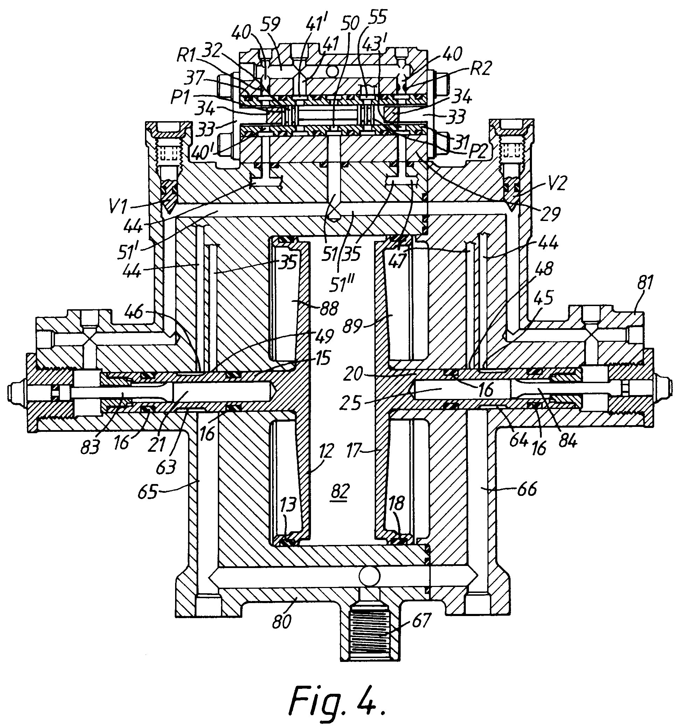

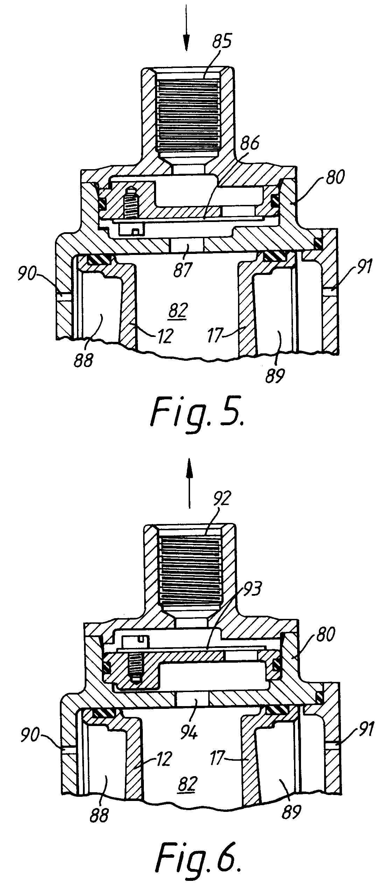

An air compressor based on the use of engine compressor air for powering the return strokes is shown in Fig. 4 of the drawings and the associated Figs. 5 and 6. Those parts of the air compressor of Figs. 4 to 6 which correspond to parts of the air compressor of Figs. 1 to 3 have been given the same reference numerals.

Because engine compressor air is used to power the return stroke it is possible to arrange that the two pistons operate in a common cylinder rather than in separate cylinders as in the air compressor of Figs. 1 to 3, and the spool valve assembly is simplified by eliminating the connecting pipe 60 and ports 42, 58 and 56 (Figs. 1 to 3) since hydraulic power is not required for the return (induction) stroke. The spool valve 32 thus switches high pressure hydraulic fluid and return fluid sequentially to the actuators only as in the air compressor of Figs. 1 to 3.

The air compressor shown in Fig. 4 comprises a cylinder actuator housing 80 to which is attached a main end housing 81. Within the cylinder actuator housing 80 and between it and the main end housing 81 is formed a cylinder chamber 82 in which is disposed the (large) pistons 12 and 17 in face to face relationship. The piston 12 has a piston shaft 15 mounted in the cylinder actuator housing 80 and has the reduced diameter portion 63 which co-acts with the ports 46 and 49 which connect to the passages 44 and 35, respectively. Similarly, piston 17 has a piston shaft 20 mounted in the main end housing 81 and has the reduced diameter portion 64 which co-acts with the ports 45 and 48 which connect with the passages 44 and 47 respectively.

To the top, as viewed in Fig. 4, of the cylinder actuator housing 80 is mounted the spool valve housing 29 containing the valve sleeve 31 and the spool valve 32 as in Fig. 1. The passages 44 in the cylinder actuator housing 80 and the main end housing 81 connect with the port 40' of the spool valve sleeve 31 and the passages 35 and 47 connect with the port 43' of the spool valve sleeve 31. The port 50 of the valve spool sleeve 31 connects with the passage 51 which divides into two passages 51' and 51'' which supply hydraulic fluid via the respective restrictor valves V1 and V2 and respective flow restricting dampers 83 and 84 to the hollow interiors 21 and 25 of the piston shafts 15 and 20, respectively.

Although not shown in Fig. 4, the cylinder actuator housing 80 is provided with an air inlet arrangement as shown in Fig. 5, which consists of an air inlet 85 which is coupled by means (not shown) to the aircraft engine low pressure air and which is connected to the cylinder chamber 82 via a non-return valve 86 and a chamber aperture 87. The areas 88 and 89 to the rear of the pistons 12 and 17 respectively are vented to atmosphere via respective apertures 90 and 91.

Also, although not shown in Fig. 4, the cylinder actuator housing 80 is provided with compressed air outlet arrangement as shown in Fig. 6, which consists of a compressed air outlet 92 which is connected to the cylinder chamber 82 via a non-return valve 93 and chamber aperture 94.

The operation of the air compressor of Fig. 4 will now be described. As will be seen the spool valve 32 is in its extreme left hand position which corresponds to the start of the compression stroke of the pistons 12 and 17.

Hydraulic fluid at high pressure is applied to the hydraulic supply inlet 38 and is applied via the coupling passage 39 and the valve inlet passages 40, 41 and 43 to the corresponding ports 40', 41' and 43' of the spool valve sleeve 31. The ports 40' and 43' connect the hydraulic supply to the ends P1 and P2 respectively of the spool valve 32.

With the pistons 12 and 17 in the position shown in Fig. 4, the ports 45 and 46 are open and connect to the hydraulic return 67 thereby preventing pressure build-up at the end P1 of the spool valve 32. The ports 48 and 49, however, are closed causing pressure build-up at the end P2 of the spool valve 32 thereby causing the spool valve to be biased towards the left as viewed in Fig. 4. The spool valve 32 is maintained in this position by means of the magnetic end stop 34 acting on the end P1 of the spool valve 32.

With the spool valve 32 in the position shown in Fig. 4, the port 55 is closed, but the port 41' connects with port 50 of the spool valve sleeve whereby the hydraulic pressure in passage 41 is coupled to passage 51. The hydraulic pressure in passage 51 is connected via the passages 51' and 51'', and via the respective restrictor valves V1 and V2 and respective flow restricting dampers 83 and 84 to the hollow interiors 21 and 25 of the piston shafts 15 and 20 respectively and causes the pistons 12 and 17 to be moved towards each other, thereby compressing the air in the cylinder chamber 82. The compressed air is output from the cylinder chamber 82 via the air outlet arrangement depicted in Fig. 6.

Whilst the pistons 12 and 17 are forced towards each other, the ports 46 and 49 associated with piston shaft 15 and ports 45 and 48 associated with piston shaft 20 are all open and connect to the hydraulic return outlet 67.

A point is reached, however, where ports 46 and 45 are both closed by the respective piston shafts 15 and 20, the ports 49 and 48 remaining open. In this position pressure build-up occurs in connecting pipes 44 and causes pressure build-up at end P1 of the spool valve 32 via port 40' of the spool valve sleeve 31. A point is reached where the pressure build-up at end P1 of the spool valve 32 overcomes the magnetic force between the magnetic end stop 34 and the end P1 of the spool valve 32, and causes the spool valve 32 to be forced to the right as viewed in Fig. 4. The spool valve is maintained in this position by the magnetic end stop 34 acting on the end P2 of the spool valve 32.

In this position of the spool valve 32, which corresponds to the start of the return strokes of the pistons 12 and 17, the port 41' of the spool valve sleeve 31 is closed by the spool valve 32 and the port 50 is coupled to the port 55 which effectively couples the passage 51 to the passage 57 which, by means (not shown), connects to the hydraulic return outlet 67.

In this position of the spool valve 32, the air pressure applied to the cylinder chamber 82 via the air inlet arrangement of Fig. 5 is greater than the ambient air pressure which exists in the areas 88 and 89 respectively, behind the pistons 12 and 17 and causes pressure build-up in the cylinder chamber 82 which causes the pistons 12 and 17 to be forced apart, the hydraulic fluid in the interiors 21 and 25 of the piston shafts 15 and 20 respectively being fed to the hydraulic return outlet 67 via the connecting passages 51', 51'', 51, the ports 50 and 55 and the connecting passage 57.

Whilst the pistons 12 and 17 are being forced apart by the engine low pressure air applied to air inlet 85 (Fig. 5), the ports 45, 48, 46 and 49 are all open and couple to the hydraulic return outlet 67.

A point is reached, however, as is depicted in Fig. 4, where the ports 48 and 49 are both closed by the respective piston shafts 20 and 15, the ports 45 and 46 remaining open. In this position, as has already been described, pressure build-up occurs at the end P2 of the spool valve and increases until it overcomes the magnetic effect between the magnetic end stop 34 and the end P2 of the spool valve 32, and causes the spool valve 32 to be forced towards the left as shown in Fig. 4. This position of the spool valve corresponds to the beginning of the next compression stroke.

In this way, the pistons 12 and 17, under the control of the spool valve 32 are caused to effect successive compression strokes powered by the hydraulic pressure applied to the hydraulic supply inlet 38 and return strokes powered by the engine low pressure air applied to the air inlet 85 (Fig. 5), for causing air in the cylinder chamber 82 to be compressed and output via the air compressor outlet 92 (Fig. 6).

As was the case with the air compressor of Figs. 1 to 3, the air compressor of Fig. 4 incorporates the important feature that the actuator piston area to working piston area ratio is chosen so that the system stalls when the maximum required system air pressure is achieved. This is an important safety system.

It will be appreciated that the air compressors which have been described operate on low pressure air, e.g. from an aircraft cabin or from the engine compressor and enable full boost pressure to be generated for the aircrafts hydraulic tank thus ensuring full pump performance over the full flight envelope and obviating damage which may otherwise be caused due to cavitation.

Although the air compressors which have been described are ideally suited for aircraft use, they may be used in other applications.

## Claims

1. An air compressor arrangement comprising a housing, two independently acting piston units each reciprocatively mounted in said housing, valve means controlling successive compression and return strokes of said piston units, said valve means being effective for applying pressurised hydraulic fluid to said piston units for effecting the compression strokes thereof, means operable under the control of said valve means for causing said piston units to effect said return strokes, and hydraulic AND gate means associated with each of said piston units for controlling said valve means whereby air input to said arrangement is compressed by said piston units and is output to a compressed air outlet thereof.

2. An arrangement as claimed in Claim 1, in which said valve means is effective for applying pressurised hydraulic fluid to said piston units for effecting the return strokes thereof.

3. An arrangement as claimed in Claim 2, in which each of said piston units comprises a main piston reciprocatively mounted in a respective cylinder chamber of said housing, each of said main pistons having a respective piston shaft, said piston shafts extending towards each other and each having an end face, which end faces are disposed adjacent one another, said valve means being effective for applying pressurised hydraulic fluid between said end faces for causing said piston units to effect said compression strokes.

4. An arrangement as claimed in Claim 3, in which each of said piston shafts has a hollow interior, respective return stroke pistons being provided which extend into said hollow interiors, said valve means being effective for applying pressurised hydraulic fluid to said return stroke pistons and into said hollow interiors, for effecting the said return strokes of said piston units.

5. An arrangement as claimed in Claim 3, in which said hydraulic AND gate means comprises first and second hydraulic ports associated with each of said piston shafts, said first ports being interconnected and connected to said control valve and said second ports being interconnected and connected to said control valve, each of said piston shafts having means operable in one end position of said piston units for opening said first ports and closing said second ports for setting valve means in one of two operating positions thereof and having means operable in the other end position of said piston units for opening said second ports and closing said first ports for setting said valve means in the other of said two operating positions thereof.

6. An arrangement as claimed in Claim 5, in which said valve means takes the form of a spool valve arrangement comprising a spool valve which is moveable between two end positions under the control of said hydraulic AND gate means, and which is effective for controlling the application of pressurised hydraulic fluid to said piston units for effecting the compression and return strokes thereof.

7. An arrangement as claimed in Claim 6, in which the spool valve arrangement comprises magnetic end stop means for maintaining said spool valve in each of its end positions.

8. An arrangement as claimed in Claim 3, comprising an air inlet individually associated with each of said cylinder chambers, non-return valve means associated with each of said air inlets for allowing air flow to said chambers, a common compressed air outlet associated with said cylinder chambers, and non-return valve means associated with said common air outlet for allowing compressed air flow from said chambers.

9. An arrangement as claimed in Claim 1, in which each of said piston units comprises a main piston, each of said main pistons being reciprocatively mounted in a common cylinder chamber of said housing, each of said main pistons having a respective piston shaft, said piston shafts extending away from each other, said valve means being effected for applying pressurised hydraulic fluid to each of said piston shafts for effecting the compression strokes of said main pistons, means being provided for applying a pressurised air supply to said common cylinder chamber and between said main pistons for effecting the return strokes of said main pistons.

10. An arrangement as claimed in Claim 9, in which each of piston shafts has a hollow interior, said valve means being effective for supplying pressurised hydraulic fluid to said hollow interiors for effecting said compression strokes of said main pistons.

11. An arrangement is claimed in Claim 10, comprising a flow restricting damper respectively associated with each of said hollow interiors for controlling the flow of pressurised hydraulic fluid thereto.

12. An arrangement as claimed in Claim 10, in which said hydraulic AND gate means comprises first and second hydraulic ports associated with each of said piston shafts, said first ports being interconnected and connected to said control valve and said second ports being interconnected and connected to said control valve, each of said piston shafts having means operable in one end position of said piston units for opening said first ports and closing said second ports for setting valve means in one of two operating positions thereof and having means operable in the other end position of said piston units for opening said second ports and closing said first ports for setting said valve means in the other of said two operating positions thereof.

13. An arrangement as claimed in Claim 12, in which said valve means takes the form of a spool valve arrangement comprising a spool valve which is moveable between two end positions under the control of said hydraulic AND gate means, and which is effective for controlling the application of pressurised hydraulic fluid to said piston units for effecting the compression and return strokes thereof.

14. An arrangement as claimed in Claim 13, in which the spool valve arrangement comprises magnetic end stop means for maintaining said spool valve in each of its end positions.

15. An arrangement as claimed in Claim 9, comprising a pressurised air inlet associated with said common cylinder chamber, non-return valve means associated with said pressurised air inlet for allowing pressurised air flow to said chamber and between said pistons, a compressed air outlet associated with common cylinder chamber, and non-return valve means associated with said compressed air outlet for allowing compressed air flow from said common cylinder chamber.

16. An air compressor arrangement as claimed in any preceding claim, adapted for boosting the pressure of an aircrafts hydraulic tank.
